# EUROPÄISCHE PATENTSCHRIFT

(11) **EP 2 600 035 B1**
(45) Veröffentlichungstag und Bekanntmachung des Hinweises auf die Patenterteilung: **01.02.2017**
(21) Anmeldenummer: 12187566.0
(22) Anmeldetag: 08.10.2012
(51) Int. Cl.: F16H 25/22, F16D 1/072

(54) **Planetenwälzgewindetrieb**
Vis d'entraînement à roulement planétaire
Planetary roller screw drive

(30) Priorität: 01.12.2011 DE 102011087560
(43) Veröffentlichungstag der Anmeldung: 05.06.2013
(73) Patentinhaber: Schaeffler Technologies AG & Co. KG, 91074 Herzogenaurach (DE)
(72) Erfinder: Osterlänger, Jürgen, 91448 Emskirchen (DE); Meisborn, Marco, 91315 Höchstadt a.d. Aisch (DE)

(56) Entgegenhaltungen:
- EP-A1- 0 603 067
- DE-A1- 10 347 101
- DE-A1-102010 011 820

## Beschreibung

Die vorliegende Erfindung betrifft ein Verfahren zur Herstellung eines Planetenwälzgewindetriebes, der eine Relativdrehung zwischen Spindelmutter und Gewindespindel in eine translatorische Relativverschiebung zwischen Spindelmutter und Gewindespindel umwandelt.

DE 10 2010 011 820 A1 offenbart ein Verfahren mit den Merkmalen des Oberbegriffs von Anspruch 1.

Aus DE 8513093 U1 war ein Planetenwälzgewindetrieb bekannt, der mit einer Vielzahl von über den Umfang verteilt angeordneten Planeten versehen ist, die in Wälzeingriff mit der Gewindespindel sowie der Spindelmutter stehen, wobei die Gewindespindel eine Vielzahl von schraubenförmig um die Spindelachse gewundene Windungen wenigstens einer Gewinderille aufweist. Die Spindelmutter ist an ihrem Innenumfang mit einem mutterseitigen Profil versehen, wobei das planetenseitige Profil der Planeten in Wälzeingriff mit dem mutterseitigen Profil steht. Das planetenseitige Profil ist durch ringförmig geschlossenen Rillen gebildet, die quer zur Planetenachse angeordnet sind. Die Planeten laufen auf Planetenbahnen, die quer zur Spindelachse angeordnet sind.

Im Betrieb derartiger Planetenwälzgewindetriebe kann ein Schlupf zwischen Gewindespindel und Spindelmutter beobachtet werden; wenn die Planeten ohne ausreichende Axiallast umlaufen. Das bedeutet beispielsweise, dass bei einer Umdrehung der Spindelmutter der axiale Vorschub der Gewindespindel geringer ist, als es bei schlupffreiem Betrieb der Fall ist. Im Extremfall kann eine Relativdrehung ohne axialen Vorschub beobachtet werden.

Zur Reduzierung des Schlupf ist gemäß DE 8513093 U1 vorgesehen, die Spindelmutter in zwei axial hintereinander angeordnete Mutterteile zu unterteilen, wobei zwischen beiden Mutterteilen ein in seiner Breite abgestimmter Zwischenring eingesetzt ist. Die Breite des Zwischenrings ist so bemessen, dass die Planeten sowohl in Wälzeingriff mit den beiden Mutterteilen stehen, als auch in Wälzeingriff mit der Gewindespindel.

Die Breite des Zwischenrings muss erst ermittelt werden, entweder, indem eine Breite errechnet wird, oder indem mit Lehrringen die vorgesehene Breite bei montierten Mutterteilen ermittelt wird. Die Fertigung von in der Breite abgestimmten Zwischenringen ist aufwändig.

Aufgabe der vorliegenden Erfindung war es, einen Planetenwälzgewindetrieb anzugeben, der diesen Nachteil vermeidet.

Erfindungsgemäß wurde diese Aufgabe durch ein Verfahren gemäß Anspruch 1 gelöst. Dadurch, dass ein gegen das eine axial verstellbare Mutterteil axial angestelltes Stellteil vorgesehen ist, zwischen dem und dem anderen Mutterteil das eine axial verstellbare Mutterteil angeordnet ist, ergeben sich mehrere Vorteile: Das Stellteil braucht keine besondere axiale Breite; es genügt, das Stellteil gegen das eine verstellbare Mutterteil anzustellen und soweit in Richtung auf das andere Mutterteile zu verschieben, bis ein gewünschter Abstand zwischen den Mutterteilen eingestellt ist. Bei ausreichend angestelltem Stellteil können die Planeten unter Vorspannung in Wälzeingriff mit der Spindelmutter und der Gewindespindel stehen. Ein Schlupf der Planeten ist somit auf ein Minimum reduziert.

Ein weiterer Vorteil besteht darin, dass der Planetenwälzgewindetrieb im Wesentlichen vormontiert sein kann: die Mutterteile können auf der Gewindespindel mit den zwischen Spindelmutter und Gewindespindel angeordneten Planeten vormontiert sein. Auf einfache Art und Weise kann nun das Stellteil montiert werden, dass soweit gegen das eine Mutterteil angestellt wird, bis der gewünschte Abstand zwischen den Mutterteilen eingestellt ist.

Das Stellteil ist in einem Aufnahmeteil der Spindelmutter fixiert. Wenn die gewünschte Anstellung des Stellteils gegen das eine Mutterteil durch axiales Verlagern in Richtung auf das andere Mutterteil erreicht ist, wird eine rückläufige Bewegung des einen Mutterteils in die Gegenrichtung blockiert; in diesem Sinn findet eine Fixierung des Stellteils in dem Aufnahmeteil statt, das Stellteil braucht nicht in Richtung auf das andere Mutterteil blockiert zu werden, da die Planeten ein weiteres Vorrücken des einen Mutterteiles und somit des Stellteiles in Richtung auf das andere Mutterteil verhindern.

Allerdings kann es wünschenswert sein, das Stellteil in dem Aufnahmeteil festzusetzen, beispielsweise um Geräuschbildung zu vermeiden. Daher weisen das Aufnahmeteil und das Stellteil formschlüssig ineinandergreifende Stützprofile zur axial formschlüssigen Abstützung des Stellteils auf.

Diese Stützprofile können durch ineinandergreifende Vorsprünge und Ausnehmungen gebildet sein, die an dem Aufnahmeteil sowie an dem Stützteil ausgebildet sind.

Eine besonders einfach und wirtschaftlich herstellbarer erfindungsgemäßer Planetenwälzgewindetrieb sieht vor, dass eines der Stützprofile durch plastische Umformung von Material in das andere Stützprofil gebildet ist. Hier bieten sich mehrere Möglichkeiten an:
Das aus Stahl gebildete Stützteil kann beispielsweise an seiner Mantelfläche mit einem Stützprofil versehen und in einem Wärmebehandlungsverfahren gehärtet sein. Das Aufnahmeteil kann beispielsweise durch eine dünnwandige Hülse aus Stahl gebildet sein, in der das Stützteil angeordnet ist. Material der Hülse kann nun in das Stützprofil des Stützteils eingeformt werden, sodass das Stützteil in dem Aufnahmeteil festgesetzt ist. Durch das Einformen wird demzufolge ein Stützprofil an dem Aufnahmeteil erzeugt. Das Stützprofil kann durch quer zur Spindelachse angeordnete parallele Rillen gebildet sein. In diesem Fall kann ein Walzwerkzeug mit angepassten Rillen eingesetzt werden, dass von außerhalb der Hülse radial einwärts gegen die Hülse gefahren wird, wobei Material der Hülse in die Rillen des Stützteils eingewalzt wird.

Eine andere Weiterbildung kann vorsehen, dass das Aufnahmeteil aus Stahl gebildet und in einem Wärmebehandlungsverfahren gehärtet ist, wobei das Aufnahmeteil an seiner Mantelfläche mit einem harten Stützprofil versehen ist. In diesem Fall kann das Stützteil ungehärtet sein und derart aufgeweitet werden, dass das Stützteil gegen das Stützprofil des Aufnahmeteils angepresst wird, wobei Material des Stützteils in das Stützprofil des Aufnahmeteils eingeformt wird.

Vorzugsweise ist das Stellteil als auf der Gewindespindel angeordneter Stellring ausgebildet, an dessen äußerer zylindrischer Mantelfläche das Stützprofil ausgebildet ist. Material des Aufnahmeteils kann in einem Walzvorgang in das Stützprofil eingewalzt werden, wobei der Stellring an seiner zylindrischen Mantelfläche mit Rillen versehen sein kann, in die Material des Aufnahmeteils hineingewalzt wird. Die Ausgestaltung als Ring ermöglicht eine einfache Rotation eines Walzwerkzeuges um den Ring.

Das Aufnahmeteil ist durch eine Hülse gebildet, wobei Hülsenmaterial in das Stützprofil hineingeformt ist. Insbesondere in Verbindung mit dem ringförmigen Stützteil ist ein einfaches Rotieren zwischen einem Walzwerkzeug und der Hülse möglich, um die gewünschte Einwalzung von Material zu erreichen. Eine Wanddicke der Hülse ist an einem Ende verjüngt, wobei dieses Ende einen Umformabschnitt bildet, dessen Material in das Stützprofil des Stützteils hineingeformt werden kann.

Das Aufnahmeteil ist mit einem Axialanschlag versehen, an dem das andere Mutterteil axial abgestützt ist, wobei das eine, gegenüber dem Aufnahmeteil axial verstellbare Mutterteil in dem Aufnahmeteil axial verschieblich angeordnet ist. Auf diese Weise kann ein gewünschter Abstand zwischen den Mutterteilen eingestellt werden, wobei die beiden Mutterteile zwischen dem Axialanschlag einerseits und dem Stellteil andererseits axial fixiert sind. Die beiden Mutterteile wandern auch nicht weiter aufeinander zu, weil die Planeten ein derartiges Wandern verhindern. Die beiden ringförmigen Mutterteile sind zwischen dem Axialanschlag und dem Stellteil angeordnet.

Die Gestalt des Aufnahmeteils kann je nach Anwendung und Wahl des Herstellungsverfahrens unterschiedlich sein. Es ist denkbar, das Aufnahmeteil massiv auszuführen und zu härten; in diesem Fall könnte das Stützteil weich sein und dessen Material in ein Stützprpfil des harten Aufnahmeteils einzuformen.

Die Erfindung ermöglicht ein einfaches Verfahren zur Herstellung eines erfindungsgemäßen Planetenwälzgewindetriebes: Montage der Mutterteile auf die Gewindespindel mit den Planeten, Anstellen des Stellteils gegen das eine Mutterteil in Richtung auf das andere Mutterteil für einen spielfreien Wälzeingriff der Planeten mit der Spindelmutter sowie mit der Gewindespindel, Blockieren von gegenläufigen Stellbewegungen des Stellteils in die Gegenrichtung. Mit diesen einfachen Maßnahmen kann ein nahezu schlupffreier Planetenwälzgewindetrieb bereitgestellt werden.

Nachstehend wird die Erfindung anhand eines in sechs Figuren abgebildeten Ausführungsbeispieles näher erläutert. Es zeigen:
- Figur 1: einen Längsschnitt durch einen erfindungsgemäßen Planetenwälzgewindetrieb,
- Figur 2: eine perspektivische teilweise Darstellung des Planetenwälzgewindetrieb aus Figur 1,
- Figur 3: den Planetenwälzgewindetrieb wie in Figur 1, vor einem Walzvorgang,
- Figur 4: ein erfindungsgemäßes Herstellverfahren des Planetenwälzgewindetriebes aus Figur 1,
- Figur 5: ein Einzelteil des Planetenwälzgewindetriebes aus Figur 1, und
- Figur 6: eine weiteres Einzelteil.

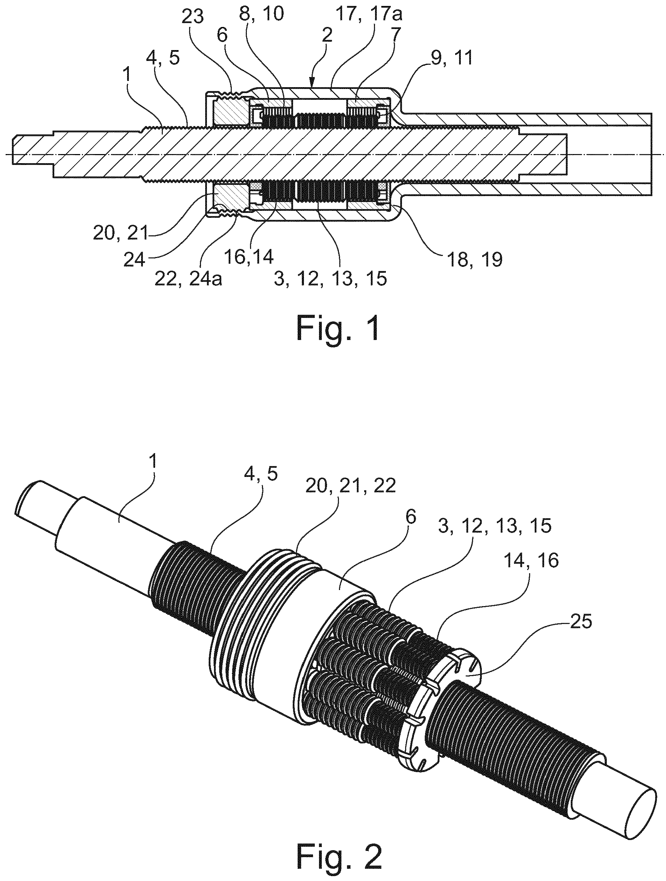

Figur 1 zeigt einen erfindungsgemäßen Planetenwälzgewindetrieb mit einer auf einer Gewindespindel 1 angeordneten Spindelmutter 2. Planeten 3 sind zwischen der Spindelmutter 2 und der Gewindespindel 1 über den Umfang verteilt angeordnet und stehen in Wälzeingriff mit der Spindelmutter 2 und der Gewindespindel 1. Unter Relativdrehung zwischen der Gewindespindel 1 und der Spindelmutter 2 wälzen die Planeten 3 sowohl am Innenumfang der Spindelmutter 2 als auch am Außenumfang der Gewindespindel 1 ab und rotieren um ihre eigene Planetenachse sowie um die Spindelachse. Die Planeten 3 laufen entlang einer quer zur Spindelachse gelegenen Planetenbahn um.

Die Gewindespindel 1 ist mit einem schraubenförmig um die Spindelachse gewundenen Gewinde 4 versehen, dass durch eine Vielzahl von Windungen einer Gewinderille 5 gebildet ist. Statt einer einzigen Gewinderille 5 kann auch ein mehrgängiges Gewinde mit einer Vielzahl von Gewinderillen vorgesehen sein.

Die Spindelmutter 2 ist mehrteilig aufgebaut. Sie weist zwei koaxial und axial hintereinander angeordnete ringförmige Mutterteile 6, 7 auf. Beide Mutterteile 6, 7 weisen an ihrem Innenumfang jeweils ein mutterseitiges Eingriffsprofil 8, 9 auf, das aus mehreren parallel angeordneten endlosen Rillen 10, 11 gebildet ist, die quer zur Spindelachse angeordnet sind.

Die Planeten 3 weisen jeweils ein planetenseitiges Eingriffsprofil 12 auf, das ein mittleres Rillenprofil 13 und zu beiden Seiten jeweils ein endseitiges Rillenprofil 14 umfasst, wobei die Rillenprofile 13, 14 jeweils aus mehreren parallel angeordneten endlosen Rillen 15, 16 gebildet sind, die quer zur Spindelachse angeordnet sind. Das mittlere Rillenprofil 13 steht in Wälzeingriff mit dem Gewinde 4 der Gewindespindel 1. Die beiden endseitigen Rillenprofile 14 stehen in Wälzeingriff mit den beiden Eingriffsprofilen 8, 9 der beiden Mutterteile 6, 7.

Die Spindelmutter 2 weist ferner eine Hülse 17 auf, in der die beiden Mutterteile 6, 7 drehfest angeordnet sind. Die Hülse 17 weist einen Axialanschlag 18 für das Mutterteil 7 auf, wobei der Axialanschlag 18 durch einen radialen Absatz 19 der Hülse 17 gebildet ist. Die Hülse 17 bildet ein Aufnahmeteil 17a für die beiden Mutterteile 6, 7.

Das Mutterteil 6 ist in einem Schiebesitz axial verschieblich in der Hülse 17 angeordnet.

Ein am offenen Ende der Hülse 17 eingesetztes Stellteil 20 ist fest mit der Hülse 17 verbunden und axial gegen das Mutterteil 6 angestellt. Das Stellteil 20 ist im Ausführungsbeispiel als Stellring 21 ausgebildet und koaxial auf der Gewindespindel 1 angeordnet. Der Stellring 21 hat eine zylindrische Mantelfläche, die mit einem Stützprofil 22 versehen ist. Die Hülse 17 ist an ihrem Ende mit einem Umformabschnitt 23 mit reduzierter Wanddicke versehen. Werkstoff des Umformabschnitts 23 ist in das Stützprofil 22 eingeformt, wobei durch dieses Einformen ein Stützprofil 24 an dem Umformabschnitt 23 ausgebildet ist. Das Ineinandergreifen der Stützprofile 22, 24 gewährleistet einen einwandfreien festen Sitz des Stellrings 21 in der Hülse 17. Das an dem Stellring 21 ausgebildete Stützprofil ist vorliegend durch mehrere parallel angeordnete Rillen 25 gebildet. Durch die Einformung des Werkstoffs des Umformabschnitts sind korrespondierende Rillen an dem Umformabschnitt 23 gebildet.

Figur 2 zeigt in perspektivischer Darstellung den Planetenwälzgewindetrieb aus Figur 1, jedoch ohne Hülse 17 und ohne das Mutterteil 7. Deutlich sind die Planeten 3 zu erkennen, die an beiden axialen Enden in Distanzringen 25 geführt und gleichmäßig über den Umfang verteilt angeordnet sind.

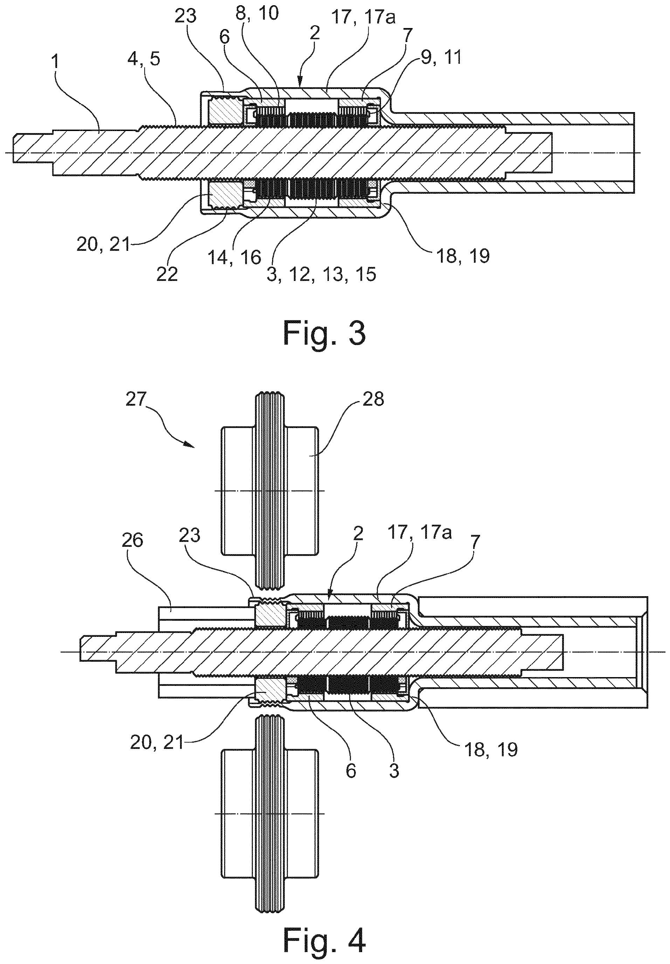

Figur 3 zeigt den Planetenwälzgewindetrieb in der Darstellung wie in Figur 1, wobei der Umformabschnitt 23 der Hülse 17 noch nicht in das Stützprofil 22 der Hülse 17 eingeformt ist. Deutlich ist die zylindrische Ausbildung des Umformabschnitts zu erkennen.

Figur 4 zeigt den Herstellungsschritt des Einformens des Materials des Umformabschnitts in das Stützprofil 22 der Hülse 17. Die Herstellung des erfindungsgemäßen Planetenwälzgewindetriebes wird nachstehend beschrieben.

In einem ersten Schritt werden die beiden Mutterteile 6, 7 und die Planeten 3 auf die Gewindespindel 1 montiert. In einem zweiten Schritt wird die Hülse 17 soweit aufgeschoben, bis das Mutterteil 7 an dem Axialanschlag 18 anschlägt. In einem dritten Schritt wird über ein Werkzeug 26 der Stellring 21 in Richtung auf das Mutterteil 6 geschoben; das Mutterteil 6 wird über den angestellten Stellring 21 soweit in Richtung auf das Mutterteil 7 geschoben, bis die Planeten 3 spielfrei in Wälzeingriff mit der Gewindespindel 1 und der Spindelmutter 2 stehen. In einem vierten Schritt wird ein Walzwerkzeug 27 an den Umformabschnitt 23 gefahren. Walzen 28 des Walzwerkzeuges 27 sind an gegenüberliegenden Seiten des Umformabschnitts 23 angeordnet und mit einem Rillenprofil 29 versehen ist, das auf die Rillen des Stützprofils 22 des Stützringes 21 abgestimmt ist. Die Walzen 28 werden radial aufeinander zu bewegt, wobei der Mantel des Umformabschnitts 23 unter dem Druck der Walzen 28 umgeformt und in das Stützprofil 22 des Stützrings 21 eingewalzt wird. Figur 4 zeigt die Situation nach Abschluss des Walzvorganges bei geöffnetem Walzwerkzeug 27. Nach Abschluss des Walzvorganges kann das Werkzeug 26 axial zurück gefahren werden.

Die Erfindung eignet sich insbesondere für Planetenwälzgewindetriebe mit keilförmigen Eingriffsprofilen, die Rillen also ein Zahnprofil aufweisen, das durch keilförmig angeordnete Flanken begrenzt ist. Unter axialer Belastung wandern die Planeten radial entlang diesen Flanken, bis ein weiteres Wandern verhindert ist, weil entweder die Gewindespindel oder die Spindelmutter ein weiteres radiales Ausweichen oder Wandern verhindern.

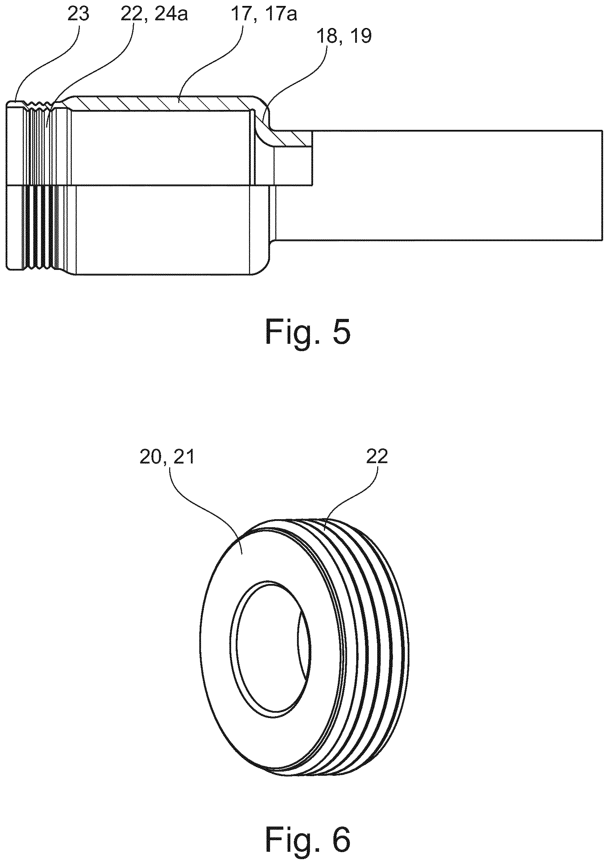

Die Figuren 5 und 6 zeigen die Hülse 3 und den Stellring 21 als Einzelteile.

### Bezugszeichenliste

- 1: Gewindespindel
- 2: Spindelmutter
- 3: Planet
- 4: Gewinde
- 5: Gewinderille
- 6: Mutterteil
- 7: Mutterteil
- 8: Eingriffsprofil
- 9: Eingriffsprofil
- 10: Rille
- 11: Rille
- 12: planetenseitiges Eingriffsprofil
- 13: mittleres Rillenprofil
- 14: endseitiges Rillenprofil
- 15: endlose Rille
- 16: endlose Rille
- 17: Hülse
- 17a: Aufnahmeteil
- 18: Axialanschlag
- 19: radialer Absatz
- 20: Stützteil
- 21: Stützring
- 22: Stützprofil
- 23: Umformabschnitt
- 24: Stützprofil
- 24a: Rille
- 25: Distanzring
- 26: Werkzeug
- 27: Walzwerkzeug
- 28: Walze

## Patentansprüche

1. Verfahren zur Herstellung eines Planetenwälzgewindetriebes, mit einer auf einer Gewindespindel (1) angeordneten Spindelmutter (2), die in zwei axial zueinander einstellbare ringförmige Mutterteile (6, 7) geteilt ist, und die mit einem durch eine Hülse (17) gebildeten Aufnahmeteil (17a) für die beiden Mutterteile (6, 7) versehen ist, wobei das eine, gegenüber dem Aufnahmeteil (17a) axial verstellbare Mutterteil (6) in dem Aufnahmeteil (17a) axial verschieblich angeordnet ist, wobei das andere Mutterteil (7) an einem Axialanschlag (18) des Aufnahmeteils (17a) axial abgestützt ist, wobei beide ringförmigen Mutterteile (6, 7) zwischen dem Axialanschlag (18) und dem Stellteil (20) angeordnet sind, und mit einer Vielzahl von über den Umfang verteilt angeordneten Planeten (3), die in Wälzeingriff mit der Spindelmutter (2) und der Gewindespindel (1) sind, wobei ein gegen das eine axial verstellbare Mutterteil (6) axial angestelltes Stellteil (20) vorgesehen ist, zwischen dem und dem anderen Mutterteile (7) das eine axial verstellbare Mutterteil (6) angeordnet ist, und wobei das Aufnahmeteil (17a) und das Stellteil (20) formschlüssig ineinander greifende Stützprofile (22, 24) zur axial formschlüssigen Abstützung des Stellteils (20) aufweisen, enthaltend den folgenden Schritt: Montage der Mutterteile (6, 7) auf die Gewindespindel (1) mit den Planeten (3), **gekennzeichnet durch** die folgenden Schritte: Anstellen des **durch** einen Stellring (21) gebildeten Stellteils (20) unmittelbar gegen das eine axial verstellbare Mutterteil (6) in Richtung auf das andere, unmittelbar an dem Axialanschlag (18) des Aufnahmeteils (17a) abgestützte Mutterteil (7) für einen spielfreien Wälzeingriff der Planeten (3) mit der Spindelmutter (2) sowie mit der Gewindespindel (1), Blockieren von gegenläufigen Stellbewegungen des Stellrings (21) in die Gegenrichtung, wobei eine Wanddicke der Hülse (17) an einem Ende verjüngt ist, wobei dieses Ende einen Umformabschnitt (23) bildet, dessen Material in das Stützprofil (22) des Stellteils (20) hineingeformt wird,

2. erfahren zur Herstellung eines Planetenwälzgewindetriebes nach Anspruch 1, bei dem der Stellring (21) auf der Gewindespindel (1) angeordnet ist, an dessen äußerer Mantelfläche das Stützprofil (22) ausgebildet ist.

## Claims

1. Method for producing a planetary roller screw drive, having a spindle nut (2) which is arranged on a threaded spindle (1) and is divided into two annular nut parts (6, 7) which can be set axially with respect to one another, and which is provided with a receiving part (17a) for the two nut parts (6, 7), which receiving part (17a) is formed by way of a sleeve (17), the one nut part (6) which can be adjusted axially with respect to the receiving part (17a) being arranged axially displaceably in the receiving part (17a), the other nut part (7) being supported axially on an axial stop (18) of the receiving part (17a), both annular nut parts (6, 7) being arranged between the axial stop (18) and the actuating part (20), and having a multiplicity of planets (3) which are arranged distributed over the circumference and are in rolling engagement with the spindle nut (2) and the threaded spindle (1), an actuating part (20) which is set axially against the one axially adjustable nut part (6) being provided, between which actuating part (20) and the other nut part (7) the one axially adjustable nut part (6) is arranged, and the receiving part (17a) and the actuating part (20) having supporting profiles (22, 24) which engage into one another in a positively locking manner for supporting the actuating part (20) in an axially positively locking manner, comprising the following steps: mounting of the nut parts (6, 7) onto the threaded spindle (1) with the planets (3), **characterized by** the following steps: setting of the actuating part (20) which is formed by way of an actuating ring (21) directly against the one axially adjustable nut part (6) in the direction of the other nut part (7) which is supported directly on the axial stop (18) of the receiving part (17a), for a play-free rolling engagement of the planets (3) with the spindle nut (2) and with the threaded spindle (1), blocking of opposed actuating movements of the adjusting ring (21) in the opposite direction, a wall thickness of the sleeve (17) being tapered at one end, the said end forming a forming section (23), the material of which is formed into the supporting profile (22) of the actuating part (20).

2. Method for producing a planetary roller screw drive according to Claim 1, in which the adjusting ring (21) is arranged on the threaded spindle (1), on the outer circumferential face of which the supporting profile (22) is configured.

## Revendications

1. Procédé de fabrication d'une vis à roulement planétaire, avec un écrou de broche (2) disposé sur une broche filetée (1) et séparé en deux parties d'écrou (6, 7) de forme annulaire réglables l'une par rapport à l'autre dans le plan axial pourvues d'une partie de logement (17a) formée par une douille (17) pour les deux parties d'écrou (6, 7), la première partie d'écrou (6) réglable dans le plan axial par rapport à la partie de logement (17a) étant disposée de façon coulissante dans le plan axial dans la partie de logement (17a), l'autre partie d'écrou (7) étant maintenue dans le plan axial contre une butée axiale (18) de la partie de logement (17a), les deux parties d'écrou (6, 7) de forme annulaire étant disposées entre la butée axiale (18) et la partie de réglage (20) et avec une pluralité de planètes (3) disposées de façon répartie sur l'ensemble de la périphérie et en prise de roulement avec l'écrou de broche (2) et la broche filetée (1), une partie de réglage (20) placée dans le plan axial contre la première partie d'écrou (6) réglable dans le plan axial étant prévue, la première partie d'écrou (6) étant disposée entre ladite partie de réglage et l'autre partie d'écrou (7), et la partie de logement (17a) et la partie de réglage (20) comportant des profilés de maintien (22, 24) s'engrenant l'un dans l'autre par complémentarité de formes pour maintenir par complémentarité de formes dans le plan axial la partie de réglage (20), contenant l'étape suivante : montage des parties d'écrou (6, 7) sur la broche filetée (1) avec les planètes (3), **caractérisé par** les étapes suivantes : placement de la partie de réglage (20) formée par une bague de réglage (21) directement contre la première partie d'écrou (6) réglable dans le plan axial dans la direction de l'autre partie d'écrou (7) directement maintenue contre la butée axiale (18) de la partie de logement (17a) pour une prise de roulement sans jeu des planètes (3) avec l'écrou de broche (2) ainsi qu'avec la broche filetée (1), blocage des mouvements de réglage opposés de la bague de réglage (21) dans la direction opposée, une épaisseur de paroi de la douille (17) se rétrécissant au niveau d'une extrémité, cette extrémité formant une section de transition (23) dont la matière est formée dans le profilé de maintien (22) de la partie de réglage (20).

2. Procédé de fabrication d'une vis à roulement planétaire selon la revendication 1, dans lequel la bague de réglage (21) est disposée sur la broche filetée (1) au niveau de la surface d'enveloppe extérieure de laquelle le profilé de maintien (22) est réalisé.
